Europäisches Patentamt

(19) European Patent Office

Office européen des brevets

(11) EP 0 984 994 B1

(12) EUROPÄISCHE PATENTSCHRIFT

(45) Veröffentlichungstag und Bekanntmachung des Hinweises auf die Patenterteilung:
**12.06.2002 Patentblatt 2002/24**

(51) Int Cl.⁷: **C08F 279/04**, C08L 55/02, C08L 25/12, C08L 33/20

(21) Anmeldenummer: 98929335.2

(22) Anmeldetag: **18.05.1998**

(86) Internationale Anmeldenummer:
**PCT/EP98/02919**

(87) Internationale Veröffentlichungsnummer:
**WO 98/54238 (03.12.1998 Gazette 1998/48)**

(54) **ABS-FORMMASSEN MIT VERBESSERTER VERARBEITBARKEIT**

ABS MOLDING MATERIALS WITH ENHANCED WORKING PROPERTIES

MATIERES MOULABLES EN ABS PRESENTANT UNE APTITUDE A LA MISE EN OEUVRE AMELIOREE

(84) Benannte Vertragsstaaten:
**BE DE ES FR GB IT NL**

(30) Priorität: **30.05.1997 DE 19722791**

(43) Veröffentlichungstag der Anmeldung:
**15.03.2000 Patentblatt 2000/11**

(73) Patentinhaber: **Bayer Aktiengesellschaft 51368 Leverkusen (DE)**

(72) Erfinder:
• EICHENAUER, Herbert
  D-41539 Dormagen (DE)
• KRÜGER, Peter
  D-51375 Leverkusen (DE)
• LEITZ, Edgar
  D-41541 Dormagen (DE)
• STARATSCHEK, Harry
  D-51069 Köln (DE)

(56) Entgegenhaltungen:
US-A- 4 120 851          US-A- 4 415 708
US-A- 4 478 982

• PATENT ABSTRACTS OF JAPAN vol. 006, no. 063 (C-099), 22. April 1982 & JP 57 005710 A (SUMITOMO NAUGATUCK CO LTD), 12. Januar 1982

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Thermoplastharze von ABS-Typ werden seit vielen Jahren zur Herstellung von Formteilen aller Art eingesetzt (siehe z.B. Ullmann's Encyclopedia of Industrial Chemistry, 5th Edition, Vol. A 21, Seiten 652-653, VCH, Weinheim, 1992).

Eine gebräuchliche Verarbeitungsform für solche Thermoplastharze stellt neben dem Spritzgießen das Extrudieren dar, wobei sich häufig an den Extrusionsschritt (z.B. Herstellung von Platten) ein Tiefziehschritt (Herstellung dreidimensionaler Formkörper) anschließt.

Eine Anforderung, die an zur Extrusions- und Tiefziehverarbeitung verwendete Materialien gestellt wird, ist eine gute Schmelzelastizität bei Erhalt guter Oberflächenqualität sowie guter mechanischer Eigenschaften (z.B. Zähigkeit) der tiefgezogenen Teile.

Außerdem ist ein wichtiger Punkt, daß die geeigneten Materialien einfach zugänglich (Herstellung ohne großen technischen Aufwand) und nicht kompliziert aufgebaut sind (keine schwer zugänglichen oder teuren Komponenten).

Es wurden nun Thermoplastharz-Formmassen vom ABS-Typ gefunden, die die geforderten Eigenschaften besitzen bzw. die genannten Anforderungen erfüllen, indem sie einen speziellen Gehalt an eingebautem Acrylnitril und insbesondere eine spezielle chemische Verteilung des eingebauten Acrylnitril aufweisen.

Gegenstand der Erfindung sind Thermoplastharz-Formmassen vom ABS-Typ, dadurch gekennzeichnet, daß der in Dichlormethan lösliche Polymeranteil einen mittleren Gehalt ($c_{50}$-Wert) an eingebauten Acrylnitril-Struktureinheiten von ≥28 Gew.-%, vorzugsweise 30 bis 40 Gew.-% und besonders bevorzugt 32 bis 35 Gew.-% und eine chemische Verteilung des darin eingebauten Acrylnitrils ($c_{90}$-$c_{10}$-Wert) ≥5, vorzugsweise 6 bis 25, besonders bevorzugt 7,5 bis 20 und ganz besonders bevorzugt 10 bis 15 Gew.-% aufweist.

Ein weiterer Gegenstand der Erfindung sind Formmassen vom ABS-Typ, enthaltend mindestens eine Polymerkomponente ausgewählt aus

A) einem Pfropfkautschuk hergestellt durch Polymerisation von

A1) 25 bis 70 Gew.-Teilen, vorzugsweise 35 bis 65 Gew.-Teilen, eines oder mehrerer Monomerer, wobei Acrylnitril als Monomerkomponente enthalten sein muß, auf

A2) 30 bis 75 Gew.-Teile, vorzugsweise 35 bis 65 Gew.-Teile, einer oder mehrerer Kautschukgrundlagen mit einer Glasübergangstemperatur ≤0°C mit einem mittleren Gehalt ($c_{50}$-Wert) an in der Pfropfhülle eingebauten Acrylnitril-Einheiten von ≥30 Gew.-%, vorzugsweise 31 bis 40 Gew.-% und besonders bevorzugt 32 bis 35 Gew.-% (jeweils bezogen auf die gesamte Pfropfhülle) und einer chemischen Verteilung des darin eingebauten Acrylnitrils ($c_{90}$-$c_{10}$-Wert) ≥5, vorzugsweise 6 bis 25, besonders bevorzugt 7,5 bis 20 und ganz besonders bevorzugt 10 bis 15 Gew.-% und

B) einem kautschukfreien thermoplastischen Vinylharz, erhalten durch radikalische Polymerisation von Acrylnitril und Styrol und/oder α-Methylstyrol mit einem mittleren Gehalt ($c_{50}$-Wert) an eingebauten Acrylnitril-Einheiten von ≥28 Gew.-%, vorzugsweise 30 bis 40 Gew.-%, und besonders bevorzugt 32 bis 35 Gew.-% und einer chemischen Verteilung des im Polymerharz eingebauten Acrylnitrils ($c_{90}$-$c_{10}$-Wert) von ≥5, vorzugsweise 6 bis 25, besonders bevorzugt 7,5 bis 20 und ganz besonders bevorzugt 10 bis 15 Gew.-%.

Die erfindungsgemäßen Formmassen zeichnen sich durch eine verbesserte Verarbeitbarkeit durch Extrudieren und Tiefziehen im Vergleich zu bekannten Formmassen vom ABS-Typ aus.

Besonders bevorzugte erfindungsgemäße ABS-Formmassen sind solche, die neben 10-65 Gew.-% an üblichen Pfropfkautschuken die Thermoplastharzkomponente B in Anteilen von 35 bis 90 Gew.-%, vorzugsweise 45 bis 80 Gew.-% enthalten.

Pfropfkautschuke A) im Sinne der Erfindung sind die bei der Pfropfpolymerisation von Monomeren A.1) in Gegenwart von Kautschuk A.2) entstandenen Produkte, wobei die oben genannte chemische Verteilung des eingebauten Acrylnitrils eingehalten werden muß.

Monomere A.1) sind vorzugsweise Gemische aus

A.1.1) 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäure-($C_1$-$C_4$)-Alkylester (wie z.B. Methylmethacrylat, Ethylmethacrylat) und

A.1.2) 1 bis 50 Gew.-Teilen Vinylcyanide (ungesättigte Nitrile wie Acrylnitril und Methacrylnitril) und gegebenenfalls (Meth)Acrylsäure-($C_1$-$C_8$)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenylmaleinimid).

Bevorzugte Monomere A.1.1) sind Styrol, $\alpha$-Methylstyrol und Methylmethacrylat, bevorzugte Monomere A. 1.2) sind Acrylnitril, Maleinsäureanhydrid, N-Phenylmaleinimid und Methylmethacrylat, wobei Acrylnitril notwendigerweise als eine Monomerkomponente bei der Pfropfpolymerisation eingesetzt werden muß.

Besonders bevorzugte Monomere sind A.1.1) Styrol und A.1.2) Acrylnitril.

Für die Pfropfpolymerisate A) geeignete Kautschukgrundlagen A.2) sind beispielsweise Dienkautschuke, EPM- und EPDM-Kautschuke, also aus Ethylen/Propylen und gegebenenfalls kleinen Mengen eines nichtkonjugierten Diens (wie Norbornen, Norbornadien), Acrylat-, Polyurethan-, Silikon-, Chloropren- und Ethylen/Vinylacetat-Kautschuke sofern diese Kautschuke in Emulsionsform vorliegen.

Bevorzugte Kautschukgrundlagen A.2) sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß A.1.1) und A.1.2)), mit der Maßgabe, daß ihre Glasübergangstemperaturen unterhalb 0°C liegen.

Besonders bevorzugt werden reiner Polybutadienkautschuk sowie Butadien/Styrol-Copolymer-Kautschuke und Butadien/Acrylnitril-Copolymer-Kautschuke.

Weitere besonders geeignete Kautschukgrundlagen A.2) sind Acrylatkautschuke, vorzugsweise Polymerisate aus Acrylsäurealkylestern, gegebenenfalls mit bis zu 40 Gew.-% (bezogen auf A.2) anderen polymerisierbaren ethylenisch ungesättigten Monomeren. Zu den bevorzugten polymerisierbaren Acrylsäureestern gehören $C_1$-$C_8$-Alkylester, beispielsweise Methyl-, Ethyl, Butyl-, n-Octyl- und 2-Ethylhexylester, Halogenalkylester, vorzugsweise Halogen-$C_1$-$C_8$-Alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole. Die Menge der vernetzenden Monomere beträgt vorzugsweise 0,02 bis 5, insbesondere 0,05 bis 2 Gew.-%, bezogen auf die Pfropfgrundlage A.2).

Bei cyclischen vernetzenden Monomeren mit mindestens 3 ethylenisch ungesättigten Gruppen ist es vorteilhaft, die Menge auf unter 1 Gew.-% der Pfropfgrundlage A.2) zu beschränken.

Bevorzugte "andere" polymerisierbare ethylenisch ungesättigte Monomere, die neben den Acrylsäureestern gegebenenfalls zur Herstellung der Pfropfgrundlage A.2) dienen können, sind z.B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage A.2) sind Emulsionspolymerisate, die einen Gelgehalt von mindestens 50 Gew.-% aufweisen.

Weitere geeignete Pfropfgrundlagen gemäß A.2) sind Silikonkautschuke mit pfropfaktiven Stellen, wie sie in DE-OS 3 704 657, DE-OS 3 704 655, DE-OS 3 631 540 und DE-OS 3 361 539 beschrieben werden.

Der Gelgehalt der Pfropfgrundlage A.2) beträgt 30 bis 95 Gew.-%, vorzugsweise 40 bis 90 Gew.-% und besonders bevorzugt 45 bis 85 Gew.-% (gemessen nach der Drahtkäfigmethode in Toluol, vgl. Houben- Weyl, Methoden der Organischen Chemie, Makromolekulare Stoffe, Teil 1, S. 307 (1961), Thieme Verlag Stuttgart).

Der mittlere Teilchendurchmesser $d_{50}$ der Kautschukgrundlage A.2) beträgt im allgemeinen 100 bis 600 nm, vorzugsweise 150 bis 500 nm und besonders bevorzugt 200 bis 400 nm.

Dabei ist der mittlere Teilchendurchmesser $d_{50}$ der Durchmesser, oberhalb und unterhalb dessen jeweils 50 Gew.-% der Teilchen liegen. Er kann mittels Ultrazentrifugenmessung (W. Scholtan, H. Lange, Kolloid Z. u. Z. Polymere 250 (1972), S. 782 bis 796) bestimmt werden.

Die Pfropfkautschuke A werden vorzugsweise durch radikalische Emulsionspolymerisation hergestellt.

Bei der Herstellung der Pfropfkautschuke A können die üblicherweise als Molekulargewichtsregler eingesetzten Verbindungen wie z.B. Mercaptane oder Terpinolen oder dimeres $\alpha$-Methylstyrol verwendet werden.

Als Emulgatoren sind praktisch alle Emulgatortypen (anionische, kationische und nichtionische Emulgatoren) geeignet, bevorzugt werden anionische Emulgatoren eingesetzt.

Geeignete anionische Emulgatoren sind beispielsweise Natrium-, Kalium- oder Ammoniumsalze langkettiger Fettsäuren mit 10 bis 20 Kohlenstoffatomen, z.B. Kaliumoleat, Salze der disproportionierten Abietinsäure, Salze langkettiger Benzolsulfonate, Salze langkettiger Sulfonsäuren, z.B. die Natriumsalze von $C_9$-$C_{18}$-Alkylsulfonsäure-Gemischen und Salze von Dicarbonsäuren auf Basis cyclischer Kohlenwasserstoffgerüste gemäß DE-OS 3 639 904 und DE-OS 3 913 509.

Als Reaktionstemperaturen können beliebig solche Temperaturen gewählt werden, bei denen die eingesetzten Initiatorverbindungen in ausreichendem Maße Radikale zur Auslösung und Aufrechterhaltung der Polymerisationsreaktion liefern. Dieser Temperaturbereich liegt etwa zwischen 30°C und 120°C, vorzugsweise zwischen 45°C und 100°C und besonders bevorzugt zwischen 50 und 90°C.

Als Initiatoren kommen bei der Herstellung von A) und B) alle als Radikalbildner fungierende Substanzen in Betracht. Beispiele hierfür sind anorganische und organische Peroxide, z.B. $H_2O_2$, Di-tert.-Butylperoxid, Cumolhydroperoxid, Dicyclohexylpercarbonat, tert.-Butylhydroperoxid, p-Menthanhydroperoxid, Azoinitiatoren wie z.B. Azobisisobutyronitril, anorganische Persalze wie Ammonium-, Natrium- oder Kaliumpersulfat, Kaliumperphosphat, Natriumperborat sowie Redox-Systeme, die sich aus einem in der Regel organischen Oxidationsmittel und einem Reduktionsmittel zusammensetzen, wobei vorzugsweise im Reaktionsmedium zusätzlich Schwermetallionen vorhanden sind (siehe H. Logemann in Houben-Weyl, Methoden der organischen Chemie, Bd. 14/1, S. 263-297).

Bevorzugte Initiatoren sind Ammonium-, Natrium- oder Kaliumpersulfat sowie Redoxsysteme aus einem organischen Peroxid und einem organischen Reduktionsmittel. Besonders bevorzugte Initiatoren sind Kaliumpersulfat oder Redoxsysteme aus Cumolhydroperoxid und/oder tert.-Butylhydroperoxid und Ascorbinsäure und/oder Ascorbinsäuresalz.

Der erfindungsgemäß notwendige nicht homogene Einbau der Acrylnitrilmonomereinheiten in die Pfropfhülle (breite chemische Verteilung) ist im Prinzip bekannt. Er kann z.B. dadurch erzielt werden, daß bei der Pfropfpolymerisationsreaktion nicht während der gesamten Reaktionszeit der aufgrund der Copolymerisationsparameter für einen homogenen Aufbau notwendige Wert für das Monomerenverhältnis eingehalten wird.

Die kautschukfreie thermoplastische Vinylharzkomponente B) umfaßt ein oder mehrere durch radikalische Polymerisation von Monomerenmischungen aus Styrol und Acrylnitril, $\alpha$-Methylstyrol und Acrylnitril oder aus Styrol, $\alpha$-Methylstyrol und Acrylnitril erhaltene speziell aufgebaute Polymerisate, wobei diese weitere Comonomere in untergeordneten Mengen (bis zu ca. 15 Gew.-%) enthalten können.

Geeignete derartige Monomere sind beispielsweise Acrylsäure($C_1$-$C_8$)-alkylester (z.B. n-Butylacrylat, tert.-Butylacrylat, Ethylhexylacrylat), Methacrylsäure($C_1$-$C_8$)-alkylester (z.B. Methylmethacrylat, Ethylmethacrylat), ungesättigte Carbonsäuren einschließlich ihrer Derivate (wie Anhydride oder Imide) (z.B. Acrylsäure, Methacrylsäure, Maleinsäure, Maleinsäureanhydrid, N-Phenylmaleinimid).

Zur Erzielung der erfindungsgemäßen Verbesserung der Verarbeitbarkeit durch Extrudieren und Tiefziehen muß die thermoplastische Vinylharzkomponente B) einen speziellen Aufbau im Hinblick auf die chemische Einheitlichkeit dahingehend aufweisen, daß die Acrylnitrilmonomereinheiten nicht homogen eingebaut sind, sondern die Harze eine breite chemische Verteilung aufweisen.

Derartig aufgebaute Vinylharze sind im Prinzip bekannt. Sie werden z.B. dann erhalten, wenn bei der Polymerisation der Harze nicht während der gesamten Reaktionszeit der aufgrund der Copolymerisationsparameter für einen homogenen Aufbau notwendige Wert für das Monomerenverhältnis eingehalten wird.

Erfindungsgemäß besonders gut geeignete Vinylharze B) sind solche, bei deren Herstellung die Monomeren Styrol (a) und Acrylnitril (b) bzw. $\alpha$-Methylstyrol (a) und Acrylnitril (b) bzw. Styrol (a) und $\alpha$-Methylstyrol (a) und Acrylnitril (b) so in die Reaktionszone mindestens eines Reaktors dosiert werden, daß im Verlauf der Co-bzw. Terpolymerisationsreaktion das Gewichtsverhältnis (a) : (b) einen ansteigenden oder einen abfallenden Wert, jedoch keinen konstanten Wert, annimmt.

Erfindungsgemäß geeignete Harze weisen vorzugsweise einen mittleren Gehalt ($c_{50}$-Wert) an eingebauten Acrylnitril-Struktureinheiten von ≥30 Gew.-%, vorzugsweise 31 bis 40 Gew.-%, und besonders bevorzugt 32 bis 35 Gew.-% sowie eine solche chemische Verteilung des im Polymerharz eingebauten Acrylnitrils auf, daß ein ($c_{90}c_{10}$-Wert (($c_{90}$ minus $c_{10}$) von ≥5, vorzugsweise 6 bis 25, besonders bevorzugt 7,5 bis 20 und ganz besonders bevorzugt 10 bis 15 Gew.-% resultiert.

Dabei bedeutet der $c_{50}$-Wert den Acrylnitrilgehalt im Polymeren (in Gew.-%), oberhalb und unterhalb dessen jeweils 50 Gew.-% der Acrynitrilmenge eingebaut sind.

Entsprechend bedeutet der $c_{90}$-Wert den Acrylnitrilgehalt im Polymeren, oberhalb und unterhalb dessen 90 Gew.-% der Acrynitrilmenge eingebaut sind.

Die Bestimmung dieser Werte kann mittels HPLC mit Gradientenelution (siehe z.B. G. Glöckner : Gradient HPLC of Copolymers and Chromatographic Cross-Fractionating, Springer Verlag, Berlin-Heidelberg, 1991) erfolgen.

Neben der hier beschriebenen chemischen Uneinheitlichkeit besitzen die Vinylpolymerisatharze B) vorzugsweise mittlere Molekulargewichte $\overline{M}_w$ (Gewichtsmittel, ermittelt durch Lichtstreuung oder Sedimentation) von 20 000 bis 500 000, vorzugsweise von 50 000 bis 400 000 und besonders bevorzugt von 60 000 bis 300 000.

Die Herstellung der Vinylharze B) kann prinzipiell nach allen Verfahren der radikalischen Polymerisation wie Emulsions-, Suspensions-, Lösungs- oder Massepolymerisation erfolgen.

Das Gewichts-Verhältnis A : B ist 2 : 1 bis 1 : 4, vorzugsweise zwischen 1 : 1 und 1 : 2. Höhere Verhältnisse A : B führen zu nicht ausreichendem Fließverhalten und verringerter Steifigkeit, während niedrigere Verhältnisse A :

B als 1 : 4 eine unbefriedigende Kältezähigkeit bewirken.

Die erfindungsgemäßen Formmassen können darüber hinaus weitere bekannte Zusätze in den üblichen bzw. notwendigen Mengen enthalten. Ohne Anspruch auf Vollständigkeit seien hier genannt Stabilisatoren (z.B. sterisch gehinderte Phenole und Thioether oder Phosphitverbindungen als Synergisten), übliche Pigmente (Ruß, Metalloxide etc.), Entformungsmittel (z.B. Pentaerythrittetrastearat), Fließhilfsmittel (Ethylendiaminbissstearylamid), Füll- und Verstärkungsstoffe (z.B. Glas- und Kohlefasern), Flammschutzmittel (z.B. Tetrabrombisphenol A), Antitropfmittel (z.B. Tetrafluorethylenpolymerisate) und Antistatika (z.B. Polyalkylenether).

Die erfindungsgemäßen Formmassen können hergestellt werden, indem man die Bestandteile in bekannter Weise vermischt und bei erhöhten Temperaturen, vorzugsweise bei 200 bis 260°C, in üblichen Vorrichtungen wie Innenknetem, Extrudern oder Doppelwellenschnecken schmelzcompoundiert oder schmelzextrudiert. Die erfindungsgemäßen Formmassen eignen sich besonders zur Herstellung von Teilen durch Extrudieren (z.B. Platten und Folien) und anschließendes Tiefziehen.

Ein weiterer Gegenstand der Erfindung ist die Verwendung der beschriebenen Formmassen zur Herstellung von Formkörpern durch Extrusion und durch Tiefziehen.

**Beispiele**

1. Bestandteile

A.I. Pfropfkautschuk hergestellt durch Emulsionspolymerisation von 30,6 Gew.-Teilen Styrol und 14,4 Gew.-Teilen Acrylnitril in Gegenwart von 55 Gew.-Teilen (gerechnet als Feststoff) eines nach üblichem Verfahren hergestellten Polybutadienlatex (mittlerer Teilchendurchmesser $d_{50}$ = 423 nm, Gelgehalt = 81 Gew.-%) mit 0,5 Gew.-Teilen Kaliumpersulfat als Initiator, wobei die Monomeren innerhalb von 4 Stunden so zum Kautschuklatex zudosiert werden, daß die Styrol-Dosierung gleichmäßig kontinuierlich (jeweils 25 % der Gesamtmenge pro Stunde) und die Acrylnitril-Dosierung abfallend (40 % der Gesamtmenge in der ersten Stunde, 30 % der Gesamtmenge in der zweiten Stunde, 20 % der Gesamtmenge in der dritten Stunde und 10 % der Gesamtmenge in der vierten Stunde) erfolgen. Mittlerer Gehalt an Acrylnitril-Einheiten im Dichlormethan-löslichen Polymeranteil ($c_{50}$-Wert) = 32,1 Gew.-%, chemische Verteilung des eingebauten Acrylnitrils ($c_{90}$-$c_{10}$-Wert) = 12,4 Gew.-%).

A.II. (Vergleich):
Pfropfkautschuk hergestellt durch Emulsionspolymerisation von 30,6 Gew.-Teilen Styrol und 14,4 Gew.-Teilen Acrylnitril in Gegenwart von 55 Gew.-Teilen (gerechnet als Feststoff) eines nach üblichem Verfahren hergestellten Polybutadienlatex (mittlerer Teilchendurchmesser $d_{50}$ = 423 nm, Gelgehalt = 81 Gew.-%) mit 0,5 Gew.-Teilen Kaliumpersulfat als Initiator, wobei die Monomeren innerhalb von 4 Stunden gleichmäßig kontinuierlich zum Kautschuklatex zudosiert werden (25 % der Gesamtmenge Styrol und Acrylnitril jeweils in der ersten, zweiten, dritten und vierten Stunde). Mittlerer Gehalt an Acrylnitril-Einheiten im Dichlormethan-löslichen Polymeranteil ($c_{50}$-Wert) = 32,0 Gew.-%, chemische Verteilung des eingebauten Acrylnitrils ($c_{90}$-$c_{10}$-Wert) = 3,2 Gew.-%).

B.I. Styrol/Acrylnitril-Copolymerisat mit einem Styrol : Acrylnitril-Gewichtsverhältnis 68 : 32 und einem mittleren Molekulargewicht $\overline{M}_w \approx$ 110 000, hergestellt durch Emulsionspolymerisation, wobei innerhalb von 4 Stunden in der ersten Stunde 17 Gew.-Teile Styrol und 12,8 Gew.-Teile Acrylnitril, innerhalb der zweiten Stunde 17 Gew.-Teile Styrol und 9,6 Gew.-Teile Acrylnitril, innerhalb der dritten Stunde 17 Gew.-Teile Styrol und 6,4 Gew.-Teile Acrylnitril und innerhalb der vierten Stunde 17 Gew.-Teile Styrol und 3,2 Gew.-Teile Acrylnitril unter Verwendung von Kaliumpersulfat ($K_2S_2O_8$) als Initiator polymerisiert werden. Mittlerer Gehalt an Acrylnitril-Struktureinheiten gemessen an einer Dichlormethan-Lösung ($c_{50}$-Wert) = 31,9 Gew.-%, chemische Verteilung des eingebauten Acrylnitrils ($c_{90}$-$c_{10}$-Wert) = 13,7 Gew.-%).

B.II. (Vergleich):
Styrol/Acrylnitril-Copolymerisat mit einem Styrol : Acrylnitril-Gewichtsverhältnis 68 : 32 und einem mittleren Molekulargewicht $\overline{M}_w \approx$ 112 000, hergestellt durch Emulsionspolymerisation, wobei innerhalb von 4 Stunden jeweils gleichmäßig 17 Gew.-Teile Styrol und 8 Gew.-Teile Acrylnitril unter Verwendung von Kaliumpersulfat ($K_2S_2O_8$) als Initiator polymerisiert werden. (Mittlerer Gehalt an Acrylnitril-Struktureinheiten gemessen an einer Dichlormethan-Lösung ($c_{50}$-Wert) = 32,0 Gew.-%, chemische Verteilung des eingebauten Acrylnitrils ($c_{90}$-$c_{10}$-Wert) = 2,2 Gew.-%).

2. <u>Herstellung und Prüfung der erfindungsgemäßen Formmassen und der Vergleichsformmassen</u>

Die Komponenten A und B werden in den in Tabelle 1 angegebenen Mengen zusammen mit Additiven (2 Gew.-Teile Pentaerythrittetrastearat und 0,1 Gew.-Teile Silikonöl, jeweils pro 100 Gew.-Teile A + B) in einem Innenkneter bei Temperaturen zwischen 180 und 230°C aufgeschmolzen und homogenisiert.
Aus den Granulaten werden Platten hergestellt.

Da für eine gute Tiefziehfähigkeit von ABS-Formmassen eine hohe Schmelzelastizität (entsprechend einem niedrigen Verlustfaktor tan $\delta$) notwendig ist, kann das Tiefziehverhalten durch Bestimmung des Verlustfaktors tan $\delta$ bei niedrigen Frequenzen (entsprechend einer beim Tiefziehen auftretenden niedrigen Schergeschwindigkeit) bei einer Temperatur von 170°C ermittelt werden (Gerät : RDA II der Firma Rheometrics, Platte/Platte-Anordnung).

Von einigen Produkten werden zusätzlich extrudierte Platten (30 cm x 26 cm) zu einem Paraboloid tiefgezogen, wobei die Tiefziehfähigkeit und die Beschaffenheit der Oberfläche beurteilt wird.

Die Mechanik wird durch das Verhalten bei Schlageinwirkung beurteilt.
Wie aus Tabelle 2 ersichtlich ist, weisen nur die erfindungsgemäßen Formmassen bei niedrigen Frequenzen ($\omega$ = 0,02 rad/sec) einen für eine gute Tiefziehfähigkeit benötigten niedrigen Verlustfaktor tan $\delta$ auf; praktisches Tiefziehverhalten und Oberflächenqualität der hergestellten Paraboloide sind für die erfindungsgemäßen Formmassen sehr gut.

Die Tiefziehbarkeit und die Oberfläche der tiefgezogenen Teile werden wie folgt bewertet:

++ sehr gut

+ gut

o mittel

- schlecht

-- sehr schlecht

Tabelle 1:

| Zusammensetzungen der untersuchten Formmassen | | | | |
|---|---|---|---|---|
| Beispiele | A.I. (Gew.-Teile) | A.II. (Gew.-Teile) | B.I. (Gew.-Teile) | B.II. (Gew.-Teile) |
| 1 | 40 | -- | 60 | -- |
| 2 | 40 | -- | -- | 60 |
| 3 | -- | 40 | 60 | -- |
| 4 (Vergleich) | -- | 40 | -- | 60 |
| 5 | 30 | -- | 70 | -- |
| 6 | -- | 30 | 70 | -- |
| 7 (Vergleich) | -- | 30 | -- | 70 |

Tabelle 2 :

| Beurteilung der Formmassen | | | | |
|---|---|---|---|---|
| Beispiel | tan $\delta$ bei $\omega$ = 0,02 rad/sec | Verhalten beim Tiefziehen | Oberflächenqualität des tiefgezogenen Teils | Verhalten bei Schlageinwirkung |
| 1 | 1,1 | ++ | ++ | zäh |
| 2 | 1,4 | ++ | ++ | zäh |
| 3 | 1,2 | ++ | ++ | zäh |
| 4(Vergleich) | 1,9 | o | n.g. | zäh |
| 5 | 1,5 | ++ | ++ | zäh |
| 6 | 1,6 | + | ++ | zäh |
| 7(Vergleich) | 2,3 | - | n.g. | zäh |
| n.g. = nicht gemessen | | | | |

**Patentansprüche**

1. Thermoplastharz-Formmassen vom ABS-Typ, **dadurch gekennzeichnet, daß** der in Dichlormethan lösliche Polymeranteil einen mittleren Gehalt ($c_{50}$-Wert) an eingebauten Acrylnitril-Struktureinheiten von ≥28 Gew.-% und eine chemische Verteilung des eingebauten Acrylnitrils ($c_{90}$-$c_{10}$-Wert) ≥5 Gew.-% aufweist.

2. Thermoplastharz-Formmassen gemäß Anspruch 1, **dadurch gekennzeichnet, daß** der in Dichlormethan lösliche Polymeranteil einen mittleren Gehalt ($c_{50}$-Wert) an eingebauten Acrylnitril-Struktureinheiten von ≥30 bis 40 Gew.-% und eine chemische Verteilung des eingebauten Acrylnitrils ($c_{90}$-$c_{10}$-Wert) von 6 bis 25 Gew.-% aufweist.

3. Thermoplastharz-Formmassen vom ABS-Typ gemäß Anspruch 1, enthaltend mindestens eine Polymerkomponente ausgewählt aus A) einem Pfropfkautschuk hergestellt durch Polymerisation von

   A1) 25 bis 70 Gew.-Teilen eines oder mehrerer Monomerer, wobei Acrylnitril als Monomerkomponente enthalten sein muß, auf

   A2) 30 bis 75 Gew.-Teile einer oder mehrerer Kautschukgrundlagen mit einer Glasübergangstemperatur ≤ 0°C mit einem mittleren Gehalt ($c_{50}$-Wert) an in der Pfropfhülle eingebauten Acrylnitril-Einheiten von ≥30 Gew.-%, (jeweils bezogen auf die gesamte Pfropfhülle) und einer chemischen Verteilung des darin eingebauten Acrylnitrils ($c_{90}$-$c_{10}$-Wert) von ≥5 Gew:-%
   und

   B) einem kautschukfreien thermoplastischen Vinylharz erhalten durch radikalische Polymerisation einer Monomerenkombination aus Acrylnitril und Styrol und/oder α-Methylstyrol mit einem mittleren Gehalt ($c_{50}$-Wert) an eingebauten Acrylnitril-Struktureinheiten von ≥28 Gew.-% und einer chemischen Verteilung des im Polymerharz eingebauten Acrylnitrils ($c_{90}$-$c_{10}$-Wert) von ≥5 Gew.-%.

4. Thermoplastharz-Formmassen vom ABS-Typ gemäß Anspruch 3, enthaltend mindestens eine Polymerkomponente ausgewählt aus

   A) einem Pfropfkautschuk hergestellt durch Polymerisation von

   A1) 35 bis 65 Gew.-Teilen eines oder mehrerer Monomerer, wobei Acrylnitril als Monomerkomponente enthalten sein muß, auf

   A2) 35 bis 65 Gew.-Teile einer oder mehrerer Kautschukgrundlagen mit einer Glasübergangstemperatur ≤0°C mit einem mittleren Gehalt ($c_{50}$-Wert) an in der Pfropfhülle eingebauten Acrylnitril-Struktureinheiten von 31 bis 40 Gew.-%, (jeweils bezogen auf die gesamte Pfropfhülle) und einer chemischen Verteilung des darin eingebauten Acrylnitrils ($c_{90}$-$c_{10}$-Wert) von 6 bis 25 Gew.-% und

   B) einem kautschukfreien thermoplastischen Vinylharz erhalten durch radikalische Polymerisation einer Monomerenkombination aus Acrylnitril und Styrol und/oder α-Methylstyrol mit einem mittleren Gehalt ($c_{50}$-Wert) an eingebauten Acrylnitril-Struktureinheiten von 30 bis 40 Gew.-% und einer chemischen Verteilung des im Polymerharz eingebauten Acrylnitrils ($c_{90}$-$c_{10}$-Wert) von 6 bis 25 Gew.-%.

5. Thermoplastharz-Formmassen vom ABS-Typ gemäß Anspruch 3, enthaltend 10 bis 65 Gew.-% eines Pfropfkautschuks und 90 bis 35 Gew.-% mindestens einer kautschukfreien Vinylharzkomponente B).

6. Formmassen gemäß Anspruch 3, worin A1) ein Gemisch aus Styrol und Acrylnitril ist.

7. Formmassen gemäß Anspruch 3, worin A2) ausgewählt ist aus Polybutadien, Butadien/Styrol-Copolymer-Kautschuk und Butadien/Acrylnitril-Copolymer-Kautschuk.

8. Formmassen gemäß Anspruch 3, worin B) ein Copolymerisat aus Styrol und Acrylnitril ist.

9. Verwendung von Formmassen gemäß Ansprüchen 1 bis 8 zur Herstellung tiefgezogener Formteile aus extrudierten Platten.

**10.** Durch Tiefziehen erhaltene Formkörper aus den Formmassen gemäß Ansprüchen 1 bis 8.

**Claims**

1. Thermoplastic resin moulding compositions of the ABS type, **characterised in that** the polymer proportion soluble in dichloromethane has an average content ($c_{50}$ value) of incorporated acrylonitrile structural units of ≥28 wt.%, and a chemical distribution of the incorporated acrylonitrile ($c_{90}$-$c_{10}$ value) of ≥5 wt.%.

2. Thermoplastic resin moulding compositions according to claim 1, **characterised in that** the polymer proportion soluble in dichloromethane has an average content ($c_{50}$ value) of incorporated acrylonitrile structural units of ≥30 to 40 wt.% and a chemical distribution of the incorporated acrylonitrile ($C_{90}$-$C_{10}$ value) of 6 to 25 wt.%.

3. Thermoplastic resin moulding compositions of the ABS type according to claim 1, containing at least one polymer component selected from A) a graft rubber prepared by polymerisation of

   A1) 25 to 70 parts by wt. of one or more monomers, wherein acrylonitrile must be contained as the monomer component, onto

   A2) 30 to 75 parts by wt. of one or more rubber bases with a glass transition temperature of ≤0°C with an average content ($c_{50}$ value) of acrylonitrile units incorporated in the graft envelope of ≥30 wt.% (based on the total graft envelope in each case) and with a chemical distribution of the acrylonitrile incorporated therein ($c_{90}$-$c_{10}$ value) of ≥5 wt.%, and

   B) a rubber-free thermoplastic vinyl resin obtained by radical polymerisation of a monomer combination of acrylonitrile and styrene and/or α-methylstyrene with an average content ($c_{50}$ value) of incorporated acrylonitrile structural units of ≥28 wt.% and a chemical distribution of the acrylonitrile incorporated in the polymer resin ($c_{90}$-$c_{10}$ value) of ≥5 wt.%.

4. Thermoplastic resin moulding compositions of the ABS type according to claim 3, containing at least one polymer component selected from

   A) a graft rubber prepared by polymerisation of

   A1) 35 to 65 parts by wt. of one or more monomers, wherein acrylonitrile must be contained as the monomer component, onto

   A2) 35 to 65 parts by wt. of one or more rubber bases with a glass transition temperature of ≤0°C with an average content ($c_{50}$ value) of acrylonitrile structural units incorporated in the graft envelope of 31 to 40 wt.% (based on the total graft envelope in each case) and with a chemical distribution of the acrylonitrile incorporated therein ($c_{90}$-$c_{10}$ value) of 6 to 25 wt.%, and

   B) a rubber-free thermoplastic vinyl resin, obtained by radical polymerisation of a monomer combination of acrylonitrile and styrene and/or α-methylstyrene with an average content ($c_{50}$ value) of incorporated acrylonitrile structural units of 30 to 40 wt.% and with a chemical distribution of the acrylonitrile incorporated in the polymer resin ($c_{90}$-$c_{10}$ value) of 6 to 25 wt.%.

5. Thermoplastic resin moulding compositions of the ABS type according to claim 3, containing 10 to 65 wt.% of a graft rubber and 90 to 35 wt.% of at least one rubber-free vinyl resin component B).

6. Moulding compositions according to claim 3, wherein A1) is a mixture of styrene and acrylonitrile.

7. Moulding compositions according to claim 3, wherein A2) is selected from polybutadiene, butadiene/styrene copolymer rubber and butadiene/acrylonitrile copolymer rubber.

8. Moulding compositions according to claim 3, wherein B) is a copolymer of styrene and acrylonitrile.

**9.** The use of moulding compositions according to claims 1 to 8 for the production of thermoformed moulded parts from extruded sheets.

**10.** Moulded parts of the moulding compositions according to claims 1 to 8, obtained by thermoforming.

**Revendications**

**1.** Matières à mouler de type ABS à base de résines thermoplastiques, **caractérisées en ce que** la fraction polymère soluble dans du dichlorométhane présente une teneur moyenne (valeur $C_{50}$) en unités de structure d'acrylonitrile incorporées $\geq$ 28 % en poids et une distribution chimique de l'acrylonitrile incorporé (valeur $C_{90}$ - $C_{10}$) $\geq$ 5 % en poids.

**2.** Matières à mouler à base de résines thermoplastiques selon la revendication 1, **caractérisées en ce que** la fraction polymère soluble dans du dichlorométhane présente une teneur moyenne (valeur $C_{50}$) en unités de structure d'acrylonitrile incorporées $\geq$ 30 à 40 % en poids et une distribution chimique de l'acrylonitrile incorporé (valeur $C_{90}$ - $C_{10}$) de 6 à 25 % en poids.

**3.** Matières à mouler de type ABS à base de résines thermoplastiques selon la revendication 1, contenant au moins un composant polymère choisi parmi A) un caoutchouc greffé préparé par polymérisation de

A1) un ou plusieurs monomères, à concurrence de 25 à 70 parties en poids, l'acrylonitrile devant être présent à titre de composant monomère, sur

A2) un ou plusieurs substrats de caoutchouc, à concurrence de 30 à 75 parties en poids, possédant une température de transition vitreuse $\leq$ 0 °C avec une teneur moyenne (valeur $C_{50}$) en unités de structure d'acrylonitrile incorporées dans l'enveloppe de greffage $\geq$ 30 % en poids (chaque fois rapportés à l'enveloppe de greffage totale) et une distribution chimique de l'acrylonitrile incorporé dans ladite enveloppe (valeur $C_{90}$ - $C_{10}$) $\geq$ 5 % en poids, et

B) une résine vinylique thermoplastique exempte de caoutchouc que l'on obtient par polymérisation radicalaire d'une combinaison de monomères constitués par de l'acrylonitrile et du styrène et/ou de l'$\alpha$-méthylstyrène avec une teneur moyenne (valeur $C_{50}$) en unités de structure d'acrylonitrile incorporées $\geq$ 28 % en poids et une distribution chimique de l'acrylonitrile incorporé dans la résine polymère (valeur $C_{90}$ - $C_{10}$) $\geq$ 5 % en poids.

**4.** Matières à mouler de type ABS à base de résines thermoplastiques selon la revendication 3, contenant au moins un composant polymère choisi parmi

A) un caoutchouc greffé préparé par polymérisation de

A1) un ou plusieurs monomères, à concurrence de 35 à 65 parties en poids, l'acrylonitrile devant être présent à titre de composant monomère, sur

A2) un ou plusieurs substrats de caoutchouc, à concurrence de 35 à 65 parties en poids, possédant une température de transition vitreuse $\leq$ 0 °C avec une teneur moyenne (valeur $C_{50}$) en unités de structure d'acrylonitrile incorporées dans l'enveloppe de greffage de 31 à 40 % en poids (chaque fois rapportés à l'enveloppe de greffage totale) et une distribution chimique de l'acrylonitrile incorporé dans ladite enveloppe (valeur $C_{90}$ - $C_{10}$) de 6 à 25 % en poids, et

B) une résine vinylique thermoplastique exempte de caoutchouc que l'on obtient par polymérisation radicalaire d'une combinaison de monomères constitués par de l'acrylonitrile et du styrène et/ou de l'$\alpha$-méthylstyrène avec une teneur moyenne (valeur $C_{50}$) en unités de structure d'acrylonitrile incorporées de 30 à 40 % en poids et une distribution chimique de l'acrylonitrile incorporé dans la résine polymère (valeur $C_{90}$ - $C_{10}$) de 6 à 25 % en poids.

**5.** Matières à mouler de type ABS à base de résines thermoplastiques selon la revendication 3, contenant un caoutchouc greffé à concurrence de 10 à 65 % en poids et au moins un composant de résine vinylique B) exempt de caoutchouc à concurrence de 90 à 35 % en poids.

6. Matières à mouler selon la revendication 3, dans lesquelles, A1) est un mélange de styrène et d'acrylonitrile.

7. Matières à mouler selon la revendication 3, dans lesquelles A2) est choisi parmi le groupe comprenant du polybutadiène, un caoutchouc copolymère de butadiène/styrène et un caoutchouc de copolymère de butadiène/acrylonitrile.

8. Matières à mouler selon la revendication 3, dans lesquelles B) est un copolymère de styrène et d'acrylonitrile.

9. Utilisation de matières à mouler selon les revendications 1 à 8 pour la fabrication d'éléments moulés réalisés à partir de panneaux extrudés et soumis à un emboutissage.

10. Corps moulés obtenus par emboutissage à partir des matières à mouler selon les revendications 1 à 8.